# EUROPEAN PATENT APPLICATION

(11) **EP 1 109 002 A2**
(43) Date of publication of application: **20.06.2001**
(21) Application number: 00811145.2
(22) Date of filing: 04.12.2000
(51) Int. Cl.: G01M 3/04, G01M 3/38

(54) **Process for identifying leaks in facings consisting of waterproof layers laid on each other to form a cavity**

(30) Priority: 17.12.1999 CH 231899
(71) Applicant: Gunimperm S.A., CH-6532 Castione (CH)
(72) Inventor: Canavesi, Stefano, 6947 Comano (CH)
(74) Representative: Fiammenghi-Domenighetti, Delfina

(57) **Abstract**

A description is given of a process for identifying leaks in watertight facings (1) consisting of at least two waterproof layers (2, 3) laid on each other and spaced apart in such a way as to create a cavity (4) and bonded together by means of linear welds (5n) forming a closed polygon (6).

The process comprises the following steps:
c) connecting the cavity (4) lying within the said closed polygon (6) to pumping means (7) capable of creating and maintaining a predetermined negative pressure within the said cavity (4);
d) observing the part of the watertight facing (1) delimited by the said linear welds (5n) forming the said closed polygon (6) by means of a device (8) capable of representing objects having different temperatures with different colours, in such a way as to visually identify areas (Z) which are at a lower temperature as a result of the ingress of air through holes and its pseudoadiabatic expansion in the cavity (4).

## Description

The present invention relates to the technical field of the manufacture and installation of watertight facings consisting of at least two waterproof layers laid on each other and bonded in such a way as to form a cavity between them.

More particularly, the invention relates to a process for identifying areas where, as a result of errors in installation or defects in the material, holes or tears are caused which cause a watertight facing as described above to lose its essential airtight seal.

The aforesaid watertight facings are formed by laying at least two waterproof sheets made from synthetic resin on each other, and by subsequently bonding them with linear thermoplastic welds which form a closed polygon (usually a square) which delimits each individual portion of facing which is to be installed.

Since a completely airtight seal is of primary importance, each portion of a watertight facing is currently tested after its installation, by creating a negative pressure within its cavity by means of suction pumps.

As the pumping continues, if it is found that the maximum negative pressure which the suction pumps can generate cannot be created in the cavity, this means that there is a leak in one of the waterproof layers delimiting the said cavity, and this leak will have to be traced by trial and error.

Since leaks can be caused even by minute holes or tears which are difficult to see with the naked eye and impossible to trace when they are in the waterproof layer resting against the wall to be waterproofed, it is generally preferable, in order to avoid long delays, to remove the defective portion of facing and replace it with another, after which another test is conducted on the new facing.

This causes considerable wastage of time and materials, with the obvious negative economic implications.

The inventor has devised a process which is novel to the best of his knowledge and can be used to identify rapidly and absolutely reliably the airtightness of a portion of watertight facing, by identifying the exact areas where any leaks occur, and therefore making it possible to act rapidly in making the necessary repairs, usually without any need to remove the affected portion of facing.

This is because the inventor has considered the fact that, if a watertight facing has an opening such that the airtightness of the facing is compromised, and if air continues to be extracted from the cavity, thus creating a negative pressure within it by the pumping means, the external air at atmospheric pressure expands into the cavity after passing though the point where a leak is present.

Since this expansion takes place in an essentially adiabatic way, the air is cooled by the said expansion as soon as it has penetrated into the cavity and generates a relatively lower-temperature area in the area of the leak.

It is therefore possible to identify this area precisely if a device, such as a thermal camera sensitive to infrared rays, is used to observe the part of the watertight facing where a leak has occurred, while the generation of a suitable negative pressure continues within the cavity of the facing.

The object of the invention is therefore a process for identifying leaks in a watertight facing as described in the precharacterizing clause of the attached Claim 1, characterized by the properties disclosed in the characterizing part of the said claim. Another part of the object of the invention is the use of a device capable of representing objects having different temperatures with different colours, in order to identify the leaks in a watertight facing.

A more detailed description will now be given of an embodiment of the process according to the invention, provided by way of example, with reference to the attached drawings, which represent:
- in Fig. 1, a perspective view of a watertight facing observed with a thermal camera while a negative pressure is continuously created in its cavity;
- in Fig. 2, a cross section through one of the numerous possible types of weld between two waterproof sheets which form a cavity and are used as a watertight facing.

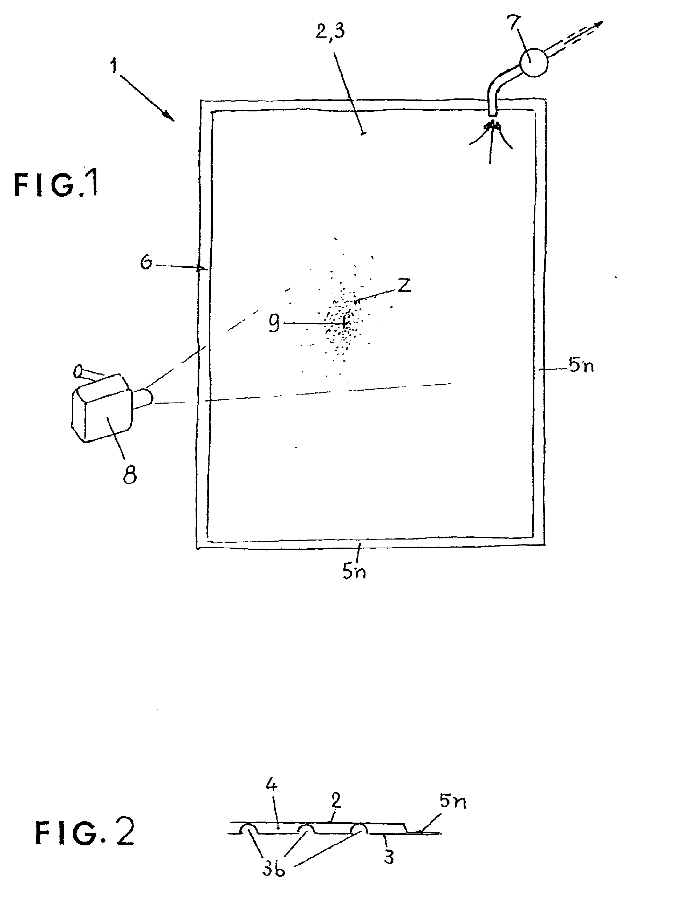

It will be seen in Figures 1 and 2 that two waterproof layers 2, 3 are bonded together by means of a linear weld 5n (Fig. 2) which delimits their outer edges with a closed polygon 6 (Fig. 1) which also delimits the inner perimeter of a portion of watertight facing which is to be installed individually, being placed adjacent to and/or partially overlapping others. As is known, the two said layers 2, 3 form a cavity 4 between them as a result of the presence of embossing 3b on one 3 of the layers, or by the interposition of reticular or linear spacing elements (not shown).

When the air contained in the cavity 4 is sucked out by the pumping means 7, this air is replaced by the external air which penetrates into the cavity through a tear 9 in the area Z where the leak is occurring.

As stated previously, this air, since it is flowing from an environment at atmospheric pressure towards the cavity 4 at lower pressure, expands in a pseudoadiabatic way, and is cooled significantly in the said area Z around and/or along the tear 9.

When the whole portion of affected watertight facing 1 is observed by means of a device capable of representing objects having different temperatures with different colours, such as a thermal camera 8, the tear 9 is rapidly identified and located, and therefore action can then be taken to repair it.

The inventor suggests that a pressure of equal to or less than 0.5 bar be created within the cavity 4: in this way the external air is caused to expand and to penetrate through the tear with an expansion ratio of approximately 1.65:1 and with a temperature drop sufficient to allow the area in which the expansion takes place to be identified, by contrast, with thermal cameras having a degree of resolution which is generally available on the market.

Thus the use of the process according to the invention achieves all the objects which the inventor intended to attain by the use of a thermal camera in this specific field of application.

It should be noted that, by using the aforementioned values of negative pressure, it is possible to detect areas of leakage by means of a thermal camera located at a distance up to approximately 5 m from the watertight facing to be tested.

## Claims

1. Process for identifying leaks in watertight facings (1) consisting of at least two waterproof layers (2, 3) laid on each other and spaced apart in such a way as to create a cavity (4) and bonded together by means of linear welds (5n) forming a closed polygon (6), characterized in that it comprises the following steps:
a) connecting the cavity (4) lying within the said closed polygon (6) to pumping means (7) capable of creating and maintaining a predetermined negative pressure within the said cavity (4);
b) observing the part of the watertight facing (1) delimited by the said linear welds (5n) forming the said closed polygon (6) by means of a device (8) capable of representing objects having different temperatures with different colours, in such a way as to visually identify areas (Z) which are at a lower temperature as a result of the ingress of air through holes and its pseudoadiabatic expansion in the cavity (4).

2. Process according to Claim 2, in which the said device which represents objects having different temperatures with different colours is a thermal camera (8) sensitive to infrared rays.

3. Process according to one of the preceding claims, in which the pressure which is created within the said cavity (4) by the action of the said pumping means (7) is equal to or less than 0.5 bar.

4. Use of a thermal camera (8) sensitive to infrared rays, for the purpose of visually identifying areas (Z) of a watertight facing (1) with a cavity (4) having lower temperatures as a result of the pseudoadiabatic expansion of the air which penetrates into the cavity (4) through tears (9) because of a negative pressure generated within the said cavity (4).
